(19) Europäisches Patentamt
European Patent Office
Office européen des brevets

(11) Publication number: 0 677 741 A2

# (12) EUROPEAN PATENT APPLICATION

(21) Application number: 95105217.4

(51) Int. Cl.⁶: G01N 27/12

(22) Date of filing: 06.04.95

(30) Priority: 12.04.94 JP 73137/94
13.12.94 JP 308603/94

(43) Date of publication of application:
18.10.95 Bulletin 95/42

(84) Designated Contracting States:
BE DE FR GB IT NL

(71) Applicant: MATSUSHITA ELECTRIC INDUSTRIAL CO., LTD.
1006, Oaza Kadoma
Kadoma-shi,
Osaka-fu, 571 (JP)

(72) Inventor: Taniguchi, Noboru
1-4-38-703, Sentai,
Sumiyoshi-ku
Osaka City, 558 (JP)

Inventor: Gamou, Takaharu
12-3, Kasugaoka 3-chome
Fujiidera City, 583 (JP)

Inventor: Yasumoto, Eiichi
5-8-104, Myokenzaka
Katano City, 576 (JP)

Inventor: Tsuluda, Kunihiro
7-12-21, Shirakashi-cho
Kashihara City, 634 (JP)

Inventor: Ito, Nobuhisa
2-3-20, Nango
Otsu City, 520 (JP)

(74) Representative: Dr. Elisabeth Jung Dr. Jürgen Schirdewahn Dipl.-Ing. Claus Gernhardt
Postfach 40 14 68
D-80714 München (DE)

## (54) Oxygen sensor.

(57) An oxygen sensor comprises a sensor element of barium cerium complex oxide, an anode and a cathode. The oxide is represented by the formula $BaCe_{1-x}M_xO_{3-\alpha}$ , wherein M represents at least one member of rare earth elements selected from the group consisting of La, Pr, Nd, Pm, Sm, Eu, Gd, Tb, Dy, Ho, Er, Y and Yb and wherein $0.16 \leqq x \leqq 0.23$ and $0 < \alpha < 1$.

FIG.1

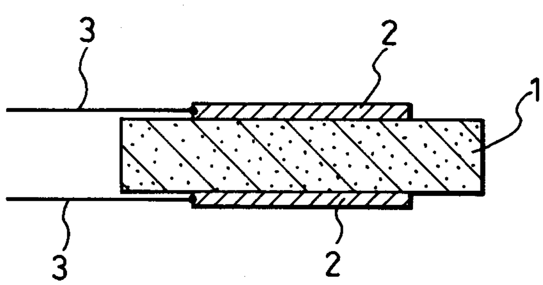




Rank Xerox (UK) Business Services
(3.10/3.09/3.3.4)

## BACKGROUNDS OF THE INVENTION

### 1. Field of the Invention

The present invention relates to an oxygen sensor for use in detecting oxygen or determination of its concentration in a wide temperature range of from room temperature to a high temperature of about 800 °C. The disclosed oxygen sensor can be utilized as an oxygen concentration detector for controlling or conditioning a living environment, or in a combustion control system for an internal combustion engine (lean-burn control system, wherein it is required to operate at a stoichiometric ratio between the fuel and the air or oxygen necessary for combustion of fuel) or a combustion appliance such as a stove or a heater in general.

### 2. Description of the Related Art

Methods for detecting oxygen or determining its concentration are typically classified into two general groups in compliance with the materials used in the methods: semiconductor-type and electrolyte-type. The methods of the semiconductor-type, which employ materials such as $TiO_2$, $SnO_2$ and the like, utilize changes in the electric conductivity of the oxide as a whole by the concentration of oxygen in a gas phase surrounding the oxide. For instance, the conductivity $\sigma$ of a sintered $TiO_2$, which is an n-type semiconductor, is directly proportional to $PO_2^{-1/4}$ at 700 °C. Since the conductivity $\sigma$ changes stepwisely at a stoichiometric air/fuel ratio, the sintered $TiO_2$ has been attracting attention in this art as the material for controlling the air/fuel ratio of a mixture supplied to an automobile engine to be used at a high temperature. Whereas, the sintered $SnO_2$ has been attracting attention in this art as the material for monitoring perfect combustion in a petroleum stove or gas heater, and for monitoring combustion of a water boiler, and the like. Another semiconductor-type material used for this purpose is $Co_{1-x}Mg_xO$. The semiconductor-type materials, which stepwisely change in conductivity at the stoichiometric air/fuel ratio (oxygen concentration: 15%), are useful for the lean burn control or combustion control at an oxygen concentration of about 15%, although this type of material is difficult to accurately grasp the oxygen concentration of lower than 15% or higher than 15%, and does not allow quantitative analysis.

On the other hand, the electrolyte-type materials are classified into two general groups in compliance with the species of the employed electrolyte: solid electrolyte-type and solution electrolyte-type. They are further classified by the modes of detection, such as cell-voltage detection and cell-current detection, into current-measuring-type (limiting current detection-type) and electromotive force-detection-type. The solution electrolyte-type is commonly called a Galvanic Cell-Type and is mainly used around room temperature and therefore is not applicable to the oxygen sensor used at such a high temperature as encountered with the combustion appliances.

At present, some of zirconia solid electrolyte-type sensors are put into practical use as the oxygen sensor operating under an environment at about 800 °C or the lean burn sensor or monitor for the automobile engine. The zirconia and analogous oxides are chemically stable in an atmosphere of hydrocarbon gas or a reducing gas and have a high conductivity for oxide ions, and therefore are enjoying a wide application. Since the zirconia is a pure conductor for oxide ions, it can accurately detect the oxygen concentration with the electromotive force of a concentration cell comprising the zirconia. The electromotive force-type device however changes its potential abruptly at an oxygen concentration of 14.5%, which is the stoichiomtric air/fuel ratio, and demonstrates a plateau in a lean burn region of higher oxygen concentration.

A limiting current-type device is attracting attention in this art as a sensor available for the lean burn region. This device is based on an electrochemical phenomenon utilizing a cathode reaction and is configured with a solid electrolyte sandwiched by a pair of electrodes, across which a constant voltage is applied. Changes in a current flowing through both electrodes are read to provide a measurement value. A current corresponding to the oxygen concentration is obtained with the Galvanic-type electrochemical sensor using an electrolyte solution as in the case of polarography, by providing a diffusion layer for a component to be detected on an electrode surface and by allowing the layer to diffuse the component. Concentration of the oxide ion however becomes constant in the solid electrolyte, a change in the current is obtained by configuring the solid electrolyte-type device to produce a diffusion layer of oxygen in a gas phase surrounding the electrode. Output of this type sensor is linear with respect to air-excess rate $\lambda$, and the sensor has a higher sensitivity and is available up to a higher air/fuel ratio as compared with that of the semiconductor-type. An operating temperature of this type sensor is however high (700 °C) and an expected lowering of the operating temperature is a problem still unsolved. An oxygen sensor of simple structure which is operable at a low temperature is therefore eagerly desired.

As the electrode for the solid electrolyte-type sensor, platinum has generally been used because of its stability at a high temperature (800 ° C) for a long period of time.

As an oxygen concentration detector for detecting oxygen and determining its concentration in the living environments, and for controlling combustion (lean burn) of a combustion appliance such as an engine and a stove, a compact, simple and convenient sensor having a high sensitivity, a high reliability, and a low manufacturing cost is desired. Since the prior art semiconductor-type sensors including those using zirconia and analogous oxides and the limiting current-type sensors must be operated at a high temperature, a heater must be incorporated in the sensor when it is placed in an environment at a temperature of 400 ° C or lower. Further, although zirconia and platinum themselves each are stable for a long period of time, the combination of both has a disadvantage that the resistance on an interface between zirconia and platinum is considerably high and has a large resistance increasing rate. In addition to this, the limiting current-type sensor using platinum for a pair of electrodes requires a layer for suppressing diffusion of oxygen. It is therefore desired to provide a solid electrolyte having a high conductivity down to a low temperature (about 200 ° C) and a small resistance of the interface between the electrolyte itself and the platinum electrode. It is also desired to provide an electrode which is stable for a long period of time. Further, in order to miniaturize the device and lower the manufacturing cost, a sensor which does not require the heater and the resistance plate or porous layer for suppressing oxygen diffusion.

## SUMMARY OF THE INVENTION

In view of the above-mentioned problems, the present invention has, as its primary object, a provision of an oxygen sensor of a small size, capable of accurately determining the oxygen concentration in a simple manner and operable at a low temperature without requiring any heater, and thus can be manufactured at a low cost.

Another object of the present is to provide an oxygen sensor of a small size, capable of determining the oxygen concentration in a simple manner, which does not require any means such as a resistance plate for suppressing diffusion of oxygen, and thus can be manufactured at a low cost.

The present invention provides an oxygen sensor comprising a sensor element of barium cerium complex oxide, an anode and a cathode provided on the same face or the different faces of the sensor element.

In the above-mentioned oxygen sensor, the oxide preferably contains at least one member of rare earth elements as a third element.

Further, the oxide is preferably an oxide represented by the formula $BaCe_{1-x}M_xO_{3-\alpha}$ , wherein M represents at least one member of rare earth elements selected from the group consisting of La, Pr, Nd, Pm, Sm, Eu, Gd, Tb, Dy, Ho, Er, Y and Yb, and wherein $0.16 \leqq x \leqq 0.23$, and $0 < \alpha < 1$. Among other rare earth elements, M is preferably Gd.

The oxygen sensor in one preferred embodiment of the present invention comprises a conductor for at least one member of ions selected from the group consisting of proton and an oxide ion, and is a semiconductor-type oxygen sensor which detects oxygen concentration by measuring the changes in the electric conductivity of the oxide across the anode and the cathode.

In this semiconductor-type oxygen sensor, it is possible to configure the sensor in a manner such that the anode and the cathode are provided on the same face of the sensor element.

In the oxygen sensor in another preferred embodiment of the present invention, the oxide is a solid electrolyte and the sensor is a limiting current-type oxygen sensor which detects oxygen concentration by measuring the changes in the output current produced when a constant voltage is applied across both electrodes.

In this limiting current-type oxygen sensor, a means for suppressing the diffusion of oxygen in the solid electrolyte may be provided on the cathode side.

In this limiting current-type oxygen sensor, at least one of the anode and the cathode may be made of platinum or a material consisting mainly of platinum.

Alternatively, it is possible to configure at least one of the anode and the cathode with silver or a material consisting mainly of silver.

It is further possible to configure the anode with platinum, silver or a material consisting mainly of platinum or silver, and to configure the cathode with gold or a material consisting mainly of gold.

Alternatively, it is possible to configure the anode with silver or a material consisting mainly of silver, and to configure the cathode with platinum or a material consisting mainly of platinum.

A more preferable limiting current-type oxygen sensor is configured with a cathode made of a mixed conductor for electrons (holes) and ions.

It is preferable for the above-mentioned mixed conductor to be a dense material having an intrinsic density of higher than 90%.

While the novel features of the present invention are set forth particularly in the appended claims, the invention, both as to organization and content, will be better understood and appreciated, along with other objects and features thereof, from the following detailed description taken in conjunction with the attached drawings.

## BRIEF DESCRIPTION OF THE DRAWINGS

FIG.1 is a longitudinal cross-sectional view of an oxygen sensor built in accordance with Example 2 of the present invention.

FIG.2 is a diagram showing a relationship between the oxygen partial pressure and the electric resistance of the oxygen sensor shown in FIG.1.

FIG.3 is a longitudinal cross-sectional view of an oxygen sensor built in accordance with Example 3 of the present invention.

FIG.4 is a diagram showing a relationship between the oxygen partial pressure and the electric resistance of the oxygen sensor shown in FIG.3.

FIG.5 is a longitudinal cross-sectional view of a limiting current-type oxygen sensor built in accordance with Example 4 of the present invention.

FIG.6 is a plan view of an oxygen sensor shown in FIG.5.

FIG.7 is a diagram showing a comparison of current-voltage characteristics obtained by cyclic voltammetry at 500 °C of the oxygen sensor of Example 4 and a known zirconia-type sensor.

FIG.8 is a diagram showing a comparison of current-voltage characteristics at 200 °C of the oxygen sensor of Example 4 and a known zirconia-type sensor.

FIG.9 is a diagram showing a current-voltage characteristic of the oxygen sensor of Example 5 obtained by cyclic voltammetry at 700 °C.

FIG.10 is a diagram showing a current-voltage characteristic of the oxygen sensor of Example 6 obtained by cyclic voltammetry at 500 °C.

FIG.11 is a diagram showing Cole-Cole plots of the platinum electrode and the silver electrode of the oxygen sensor of Example 7 at 500 °C.

FIG.12 is a diagram showing a relationship between the oxygen partial pressure and the electric resistance of the oxygen sensor of Example 8.

It will be recognized that some or all of the Figures are schematic representations for purposes of illustration and do not necessarily depict the actual relative sizes or locations of the elements shown.

## DETAILED DESCRIPTION OF THE PREFERRED EMBODIMENTS

The present invention employs a barium cerium complex oxide as the oxide for configuring the oxygen sensor element. Among the other oxides, an oxide represented by the formula $BaCe_{1-x}M_xO_{3-\alpha}$ , wherein M represents at least one member of rare earth elements selected from the group consisting of La, Pr, Nd, Pm, Sm, Eu, Gd, Tb, Dy, Ho, Er, Y and Yb and $\alpha$ represents a loss in oxygen amount, and wherein $0.16 \leqq x \leqq 0.23$ and $0 < \alpha < 1$, is an excellent conductor for both of protons and oxide ions, and validly and effectively functions as an element for the semiconductor-type sensor or the limiting current-type sensor.

That is, the prior art semiconductor-type sensor has been utilizing a phenomenon that the electric conductivity of the oxide such as $TiO_2$, $SiO_2$ and the like changes in the vicinity of the stoichiometric air/fuel ratio. In the lean burn region, however, the change in the electric conductivity of such oxide is not sufficiently great for permitting an accurate measurement of the oxygen concentration; in other words, the oxide cannot be available for this purpose. In contrast, the above-mentioned oxide has a great change in the electric conductivity in the lean burn region. Therefore, besides being able to detect oxygen in the vicinity of the stoichiometric air/fuel ratio, the sensor in accordance with the present invention can also detect oxygen in the lean burn region.

In addition, a typical oxide which has been employed in the prior art limiting current-type sensor is zirconia and analogous oxides, whose conductivity for the oxide ion is about $2 \times 10^{-2}$S/cm at 700 °C and about $10^{-3}$S/cm at 500 °C. In contrast to this, since the complex oxide in accordance with the present invention has an ion conductivity of about 100 times as large as that of zirconia and analogous oxides at 500 °C, it gives a sensor having a high sensitivity. Further, since the complex oxide has a sufficient oxygen pumping ability at a low temperature of about 200 °C, it can be used at a lower temperature as compared with that of the prior art.

In the limiting current-type oxygen sensor, it is required to provide a means such as a resistance plate which suppresses the diffusion of oxygen usually on its cathode side. In a preferred embodiment of the present invention, dissociation of oxygen at the cathode side can effectively be suppressed by employing a cathode made of a material whose activity for oxygen is lower than that of the anode, and thus the sensor can omit such an additional element as the above-mentioned resistance plate. This may be performed in a mode, wherein platinum or silver is employed for the anode and gold for the cathode, or alternatively, silver for the anode and platinum for the cathode, respectively. In addition, by configuring the cathode with a mixed conductor for electrons (holes) and ions, it is also possible to omit the means for suppressing the oxygen diffusion. In this case, any particular restriction is imposed on the material for configuring the anode.

By configuring either one of the anode or the cathode, or both with silver, the present invention can provide an oxygen sensor which has a small resistance of the electrode/electrolyte interface and a long-term stability. Hithertofore, the electrodes of an oxygen pump operable at a high temperature have been configured with platinum. The reason is that it is stable at a high temperature of 500 °C or higher, although platinum is expensive. At a temperature of 500 °C or lower, silver has a higher activity for oxygen and a smaller resistance of electrode/electrolyte interface than platinum, and therefore it can perform the oxygen pumping more smoothly than platinum. Silver is however difficult to use at a temperature exceeding 800 °C.

As described above, according to the present invention, it is possible to manufacture a small and simple oxygen sensor having a high sensitivity and a high reliability at a low cost. The oxygen sensor in accordance with the present invention can be utilized as an oxygen concentration detector for determining the indoor oxygen concentration and as a combustion controller or monitor of the combustion appliance such as automobile engines and stoves (lean burn controller) in a wide temperature range from room temperature to about 800 °C.

In the following paragraphs, preferred embodiments of the present invention will be described by way of example with reference to the attached drawings.

## EXAMPLE 1

In this example, an embodiment of the semiconductor-type oxygen sensor is described.

A barium cerium complex oxide having a formula $BaCe_{0.8}Y_{0.2}O_{3-\alpha}$ or $BaCe_{0.75}Eu_{0.25}O_{3-\alpha}$ was used by finishing it to a disk having a thickness of 0.5 mm and a diameter of 13 mm. This disk was provided with platinum electrodes on both faces thereof. Changes in the resistance of the oxide element was investigated by placing the sensor element in an electric furnace and varying an atmosphere inside the furnace from a nitrogen atmosphere containing oxygen at 1% to air at a predetermined temperature. The result of the measurement is shown in Table 1 below in comparison with that described in the prior art zirconia-type sensor.

Table 1

| Oxide | Measurement temperature | Ratio of resistance value (Digit of resistance value) |
|---|---|---|
| $BaCe_{0.8}Y_{0.2}O_{3-\alpha}$ | 300℃ | 1.2 ($10^3$kΩ) |
| $BaCe_{0.75}Eu_{0.25}O_{3-\alpha}$ | 250℃ | 2.0 ($10^3$kΩ) |
| $ZrO_2$ | 500℃ | 0.5 ($10^3$kΩ) |

Ratio of resistance value represents:

$$\frac{\text{(Resistance value in an air atmosphere)}}{\text{(Resistance value in a nitrogen atmosphere containing oxygen by 1\%)}}.$$

From Table 1, it is appreciated that the barium cerium complex oxide has a large variation in resistance value with respect to the changes in the oxygen concentration, and has a high sensitivity to oxygen. It is also appreciated that the element configured in accordance with this example is more active for oxygen by from about twice to four times as compared with the prior art material.

In addition, it is also appreciated that any of the barium cerium complex oxides represented by the formula $BaCe_{1-x}M_xO_{3-\alpha}$ is highly sensitive to oxygen when M in the formula is Gd, Dy or Yb. If the value x exceeds 0.4, a synthesis of the oxide is difficult.

As apparent from the results obtained with this example, the oxygen sensor which employs the barium cerium complex oxide has a higher sensitivity as compared with the sensor employing the prior art oxides, and is capable of detecting the oxygen concentration even at a low temperature. Such oxygen sensor is simple in its structure, enabling a lower manufacturing cost.

## EXAMPLE 2

FIG .1 is a longitudinal cross-sectional view showing a structure of an oxygen sensor in accordance with this example. In this figure, the oxide 1 has a formula $BaCe_{0.8}Gd_{0.2}O_{3-\alpha}$ , which is a mixed ion conductor for protons and oxide ions. This oxide is a perovskite-type oxide and is thermally-stable. Further, oxides of this kind are normally unstable in a reducing gas atmosphere but this particular oxide is stable in a reducing gas atmosphere. The oxide 1 has a size of 10 mm × 10 mm and a thickness of 0.4 mm and is provided with platinum electrodes 2 on both faces thereof.

Characteristic of this sensor element was investigated by exposing the oxide to a flow of the gas to be detected having the respective oxygen concentrations, with the sensor element kept at a temperature ranging from 300 °C to 500 °C. FIG.2 shows the characteristic of the sensor element at 500 °C. FIG.2 also shows the characteristic of an oxygen sensor of a comparative example which employs an oxide semiconductor of $Co_{0.3}Mg_{0.7}O$ at 900 °C.

As clearly shown in FIG. 2, by employing the oxygen sensor of the present invention, it is possible to increase the difference in conductivity at the lean burn region and thus to detect the oxygen concentration more accurately as compared with the case wherein the oxide semiconductor of $Co_{0.3}Mg_{0.7}O$ is used. It is therefore concluded that it has a wider application than that of the prior art device because it can be used even at a low temperature.

## Example 3

FIG.3 shows a configuration of an oxygen sensor in accordance with this example. In this figure, the oxide 1 has a formula $BaCe_{0.8}Gd_{0.2}O_{3-\alpha}$ , which is a mixed ion conductor of protons and oxide ions as that in Example 2. The oxide 1 has a size of 5 mm × 15 mm and a thickness of 0.4 mm and is provided with a pair of platinum electrodes 2 on one face thereof.

Characteristic of this sensor element was investigated by exposing the element to a flow of the gas to be detected having the respective oxygen concentrations, with the sensor element kept at a temperature ranging from 300 °C to 500 °C. FIG. 4 shows the characteristic of the sensor element at 500 °C together with the characteristic of the oxygen sensor of Example 2.

As clearly shown by FIG. 4, it is appreciated that the oxygen sensor has a performance equivalent to that of the sensor of Example 2, by employing a structure having a pair of electrodes on the same face of the oxide. Since this sensor is manufactured by providing the electrodes on the same side face of the oxide, the manufacturing steps can be reduced and thus give a simple oxygen sensor having a high performance. It is also appreciated that oxygen sensor employing an oxide of the formula $BaCe_{0.8}Nd_{0.2}O_{3-\alpha}$ has a performance equivalent to the sensor employing $BaCe_{0.8}Gd_{0.2}O_{3-\alpha}$ .

## EXAMPLE 4

FIG. 5 and FIG. 6 are a longitudinal cross-sectional view and a plan view, respectively, showing the structure of the limiting current-type oxygen sensor configured in accordance with this example.

A solid electrolyte 11 in a sensor unit is a sintered oxide of the formula $BaCe_{0.8}Gd_{0.2}O_{3-\alpha}$ having a size of 10 mm × 10 mm and a thickness of 0.5 mm. An anode 12 and a cathode 13 are provided on both faces of the solid electrolyte 11, by coating the surfaces with a fritless Pt-paste prepared by dispersing fine powder of platinum in terpineol and by firing the coated paste at 900 °C for 1 hour. A resistance plate 14 made of alumina which suppresses the diffusion of oxygen having a size of 10 mm × 10 mm and a thickness of 0.5 mm is provided on the cathode side of the sensor with a ceramic binder layer 15, while leaving a gas inlet opening of 2 mm in diameter. Lead wires 16 and 17 are provided on the anode 12 and the cathode 13, respectively.

A limiting current characteristics of this sensor were investigated by means of cyclic voltammetry (CV) at various temperatures. As the test gas, air alone or a gas containing oxygen by 10% or 0%, each balanced with nitrogen, was supplied to investigate the relationship between the oxygen concentration and the limiting current.

FIG .7 is a diagram showing current-voltage characteristics of a sensor (a) of the present invention and those of a zirconia-type sensor (b) of a comparative example at 500 °C. As apparent from this diagram, it is appreciated that the sensor (a) of the present invention is excellent in terms of its relative sensitivity as compared with the zirconia-type sensor (b).

FIG. 8 is a diagram showing current-voltage characteristics of the sensor (a) of the present invention at 200 °C, 300 °C, 350 °C and 400 °C, respectively. FIG. 8 also shows current-voltage characteristic of the known zirconia-type sensor (b) at 200 °C. From this diagram, it is appreciated that the sensor (a) of the present invention can sufficiently sense a difference in the oxygen concentration with the limiting current even at such a low temperature as 200 °C. The fact that this solid electrolyte of $BaCe_{0.8}Gd_{0.2}O_{3-\alpha}$ is stable in an atmosphere of hydrocarbon or reducing gas has previously been confirmed by a test conducted by employing the solid electrolyte in a fuel cell as long as 5,000 hours.

As apparent from this example, the oxygen sensor which employs a barium cerium complex oxide as its solid electrolyte has a higher sensitivity, and is capable of directly determining the oxygen concentration even at a low temperature. This oxygen sensor is simple in its structure by an omission of the heater and low in cost, as compared with the prior art zirconia-type sensor.

Further, an interface resistance between zirconia and a platinum electrode, and that between the $BaCe_{0.8}Gd_{0.2}O_{3-\alpha}$ and the platinum electrode were measured according to an alternating current impedance method. The results of the measurement indicated that the zirconia/platinum interface resistance was several MΩ cm, whereas the $BaCe_{0.8}Gd_{0.2}O_{3-\alpha}$/platinum interface resistance was somewhere around several tens Ωcm. It is therefore appreciated that the electrolyte/electrode interface resistance can be suppressed by a combination of the barium cerium complex oxide with platinum electrode.

EXAMPLE 5

This example describes an oxygen sensor based on a combination of the solid electrolyte with the electrodes at least one of which is a mixed conductor for both electrons (holes) and ions.

The oxygen sensor of this type does not require the resistance plate for suppressing the oxygen diffusion because a function of controlling or determining the oxide ion conduction rate is assigned to the electrode (cathode) itself.

The sensor is configured with a solid electrolyte of a sintered oxide of the formula $BaCe_{0.8}Gd_{0.2}O_{3-\alpha}$ having a size of 10 mm × 10 mm and a thickness of 0.5 mm, an anode made of platinum and a cathode made of a mixed conductor of the oxide of the formula $La_{0.5}Sr_{0.5}Co_{0.8}Mn_{0.2}O_3$.

First, one face of the solid electrolyte was coated with a paste containing powder of $La_{0.5}Sr_{0.5}Co_{0.8}Mn_{0.2}O_3$ in a manner such that a thick film was produced and the coated electrolyte was then sintered by firing at 1,300 °C. Thereafter, a platinum electrode was provided on the opposite face of the solid electrolyte by firing. At that time, the cathode made of $La_{0.5}Sr_{0.5}Co_{0.8}Mn_{0.2}O_3$ was a dense electrode having an intrinsic density of 92% which permits very scarce gas transmission.

A limiting current characteristic of this sensor was investigated by means of a cyclic voltammetry (CV) in a manner similar to that in Example 4. As the test gas, air alone or a gas containing oxygen by 10% or 0%, each balanced with nitrogen, was supplied to investigate the relationship between the oxygen concentration and the limiting current. FIG.9 is a diagram showing the current-voltage characteristic of the sensor (c) of the present invention. As apparent from this diagram, it is appreciated that the sensor (c) of the present invention can sense a difference in the oxygen concentration with the limiting current. It is therefore appreciated that the oxygen sensor of this invention which employs the mixed conductor as its cathode has obviated the need of the resistance plate for suppressing the oxygen diffusion, and thus the present invention can provide a simple and low cost oxygen sensor.

Another investigation was conducted on the current-voltage characteristic of a sensor which employs a cathode made of a mixed conductor of $La_{0.5}Sr_{0.5}Co_{0.8}Mn_{0.2}O_3$ having an intrinsic density of 90%. As a result, it was found that there was no remarkable difference in the limiting current density attributable to the difference in the oxygen concentration, which leads to a conclusion that detection of oxygen was difficult by the sensor configured with a cathode of this density or lower.

In cases of employing the mixed conductors of the formulae $La_{0.4}Sr_{0.6}Co_{0.8}Fe_{0.2}O_3$, $La_{0.5}Sr_{0.5}Co_{0.8}Ni_{0.2}O_3$, $La_{0.5}Sr_{0.5}Co_{0.6}Cu_{0.4}O_3$ and the like as the cathode, it was also possible to measure the oxygen concentration in this limiting current system without employing any resistance plate for suppressing the oxygen diffusion.

Although the mixed conductor of the LaSrCoMnO system is used as the electrode in this example, those of the BaSrCoO system and the LaBaFeO system may likewise be used as far as they are a mixed conductor for electrons (holes) and ions.

EXAMPLE 6

This example describes an oxygen sensor configured with an anode and a cathode made of different electrode materials with each other.

In a manner similar to that in Example 5, the oxygen sensor of this example is configured with a solid electrolyte of a sintered oxide of the formula $BaCe_{0.8}Dy_{0.2}O_{3-\alpha}$ having a size of 10 mm × 10 mm and a thickness of 0.5 mm, an anode made of platinum and a cathode made of gold. A limiting current characteristic of this sensor was investigated by means of cyclic voltammetry (CV) in a manner similar to that in Example 5. As the test gas, air alone or a gas containing oxygen by 10% or 0%, each balanced with nitrogen, was supplied to investigate the relationship between the oxygen concentration and the limiting current. FIG.10 is a diagram showing the current-voltage characteristic of the sensor (d) of the present invention at 500 °C. As apparent from this diagram, it is appreciated that the sensor (d) of the present invention can sense a difference in the oxygen concentration with the limiting current. The oxygen diffusion rate was controlled or determined by the difference in the activities of the electrode surfaces, and by this function, an effect equivalent to the provision of the resistance plate for suppressing the oxygen diffusion on one (cathode) side of the electrodes was created. It is therefore appreciated that the oxygen sensor of this invention can obviate the need of the resistance plate for suppressing the oxygen diffusion by employing the anode and the cathode each made of different electrode materials, and thus the present invention can provide a simple and low cost oxygen sensor.

Although platinum and gold are used for the anode and the cathode respectively in this example, silver may be used for the anode and gold may be used for the cathode.

EXAMPLE 7

In this example, an oxygen sensor is described which employs silver or a material consisting mainly of silver for at least either one of the anode or the cathode.

In a manner similar to that in Example 4, as a solid electrolyte in a sensor unit, a sintered oxide of the formula $BaCe_{0.8}Gd_{0.2}O_{3-\alpha}$ having a size of 10 mm × 10 mm and a thickness of 0.5 mm was used. An anode and a cathode are respectively provided on both faces of the solid electrolyte by coating the surfaces with a fritless Ag-paste prepared by dispersing fine powder of silver in terpineol and by firing the coated paste at 800 °C for 1 hour. A resistance plate for suppressing the oxygen diffusion made of a forsterite plate having a size of 10 mm × 10 mm and a thickness of 0.5 mm is provided on the cathode side with a glass layer, while leaving a gas inlet opening of a diameter of 2 mm.

The resistance of the electrode/solid electrolyte interface was measured by means of an alternating current impedance method to compare with the previously described platinum electrode. Based on the result of the measurement, it was found that although there was no remarkable difference in the electrode/electrolyte interface resistance at 800 °C and 700 °C, the difference increased at 600 °C or lower. FIG.11 is a diagram showing the Cole-Cole plots representing the platinum electrode and the silver electrode, respectively. In FIG.11, an ordinate represents the resistance (imaginary number) whereas an abscissa represents the resistance (real number). As apparent from FIG.11, it is appreciated that the resistance of the silver electrode/electrolyte interface is smaller than that of the platinum electrode/electrolyte interface. Moreover, as a result of a cycle life characteristic investigated by repeating 200 heat cycles conducted from room temperature to 500 °C and then down to room temperature for 1,000 hours, it was found that the resistance of the platinum electrode/electrolyte interface increased by 7% whereas that of the silver electrode/electrolyte interface increased only about 1%.

As described above, it is apparent that the resistance of the silver electrode/electrolyte interface is smaller than that of the platinum electrode/electrolyte interface and that the sensor configured with the silver electrode has a higher sensitivity and an excellent stability for a long period of time.

Although the solid electrolyte of $BaCe_{0.8}Gd_{0.2}O_{3-\alpha}$ or $BaCe_{0.8}Dy_{0.2}O_{3-\alpha}$ is employed in Examples 4 to 7, a similar advantage will be obtained by employing those of $BaCe_{0.8}Y_{0.2}O_{3-\alpha}$, $BaCe_{0.8}Tb_{0.2}O_{3-\alpha}$ and the like.

The electrode made of platinum, silver or gold may, as a matter of course, be made of a mixture of the metals with other components. Any method of coating, vapor-depositing, sputtering, or chemical vapor deposition may also be used in the synthesis of the electrolyte and the mixed conductor.

Example 8

In this example, an oxide of the formula $BaCe_{0.8}Nd_{0.2}O_{3-\alpha}$ , which is a mixed ion conductor for protons and oxide ions, is used. The oxide has a size of 5 mm × 15 mm and a thickness of 0.4 mm and is provided with a pair of silver electrodes on one face thereof. Except for the material for the electrodes, the same configuration as in Example 3 was followed by this example for producing the sensor.

The characteristic of this sensor element was investigated by exposing the element to a flow of the gas to be detected having the respective oxygen concentrations, with the element kept at a temperature ranging from 300 °C to 500 °C. FIG.12 shows the characteristic of the sensor element at 500 °C together with that of the oxygen sensor of Example 3.

As clearly shown by FIG.12, it is appreciated that if the oxygen sensor employs silver as the material for configuring the electrode, it has a performance equivalent to that of the sensor employing platinum.

In this example, although $BaCe_{0.8}Nd_{0.2}O_{3-\alpha}$ , which is a mixed ion conductor of protons and oxide ions, is used, any of such oxides as represented by the formulae $BaCe_{0.9}Gd_{0.1}O_{3-\alpha}$ and $BaCe_{0.9}Y_{0.1}O_{3-\alpha}$ , which may contain other substitution elements in different amounts can likewise be used as far as it is a mixed ion conductor for protons and oxide ions. Further, the pair of the electrodes may not necessarily be configured with the same material; gold other than platinum or silver may be used.

Although the present invention has been described in terms of the presently preferred embodiments, it is to be understood that such disclosure are not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**Claims**

**1.** An oxygen sensor comprising a sensor element of barium cerium complex oxide, an anode and a cathode provided on the same face or the different faces of said sensor element.

**2.** An oxygen sensor in accordance with claim 1, wherein said oxide contains at least one member of rare earth elements as a third element.

**3.** An oxygen sensor in accordance with claim 2, wherein said oxide is an oxide represented by the formula $BaCe_{1-x}M_xO_{3-\alpha}$ , wherein M represents at least one member of rare earth elements selected from the group consisting of La, Pr, Nd, Pm, Sm, Eu, Gd, Tb, Dy, Ho, Er, Y and Yb and wherein $0.16 \leqq x \leqq 0.23$ and $0 < \alpha < 1$.

**4.** An oxygen sensor in accordance with claim 3, wherein said M is Gd.

**5.** An oxygen sensor in accordance with claim 1, wherein said oxide is a conductor for at least one member of ions selected from the group consisting of proton and an oxide ion, and the sensor detects oxygen concentration by measuring the changes in the electric conductivity of the oxide across said anode and cathode.

**6.** An oxygen sensor in accordance with claim 5, wherein said anode and cathode are provided on the same face of said sensor element.

**7.** An oxygen sensor in accordance with claim 1, wherein said oxide is a solid electrolyte and the sensor detects oxygen concentration by measuring the changes in the output current produced when a constant voltage is applied across said both electrodes.

**8.** An oxygen sensor in accordance with claim 7, further comprising a means for suppressing the diffusion of oxygen in the solid electrolyte provided on the cathode side.

**9.** An oxygen sensor in accordance with claim 7, wherein said cathode is a mixed conductor for electrons (holes) and ions.

**10.** An oxygen sensor in accordance with claim 7 or 8, wherein at least one of said anode and cathode is made of platinum or a material consisting mainly of platinum.

**11.** An oxygen sensor in accordance with claim 7 or 8, wherein at least one of said anode and cathode is made of silver or a material consisting mainly of silver.

**12.** An oxygen sensor in accordance with claim 7 or 8, wherein said anode is made of platinum, silver or a material consisting mainly of platinum or silver, and said cathode is made of gold or a material consisting mainly of gold.

**13.** An oxygen sensor in accordance with claim 7 or 8, wherein said anode is made of silver or a material consisting mainly of silver, and said cathode is made of platinum or a material consisting mainly of platinum.

**14.** An oxygen sensor in accordance with claim 9, wherein said mixed conductor is a dense material having an intrinsic density of higher than 90%.

FIG.1

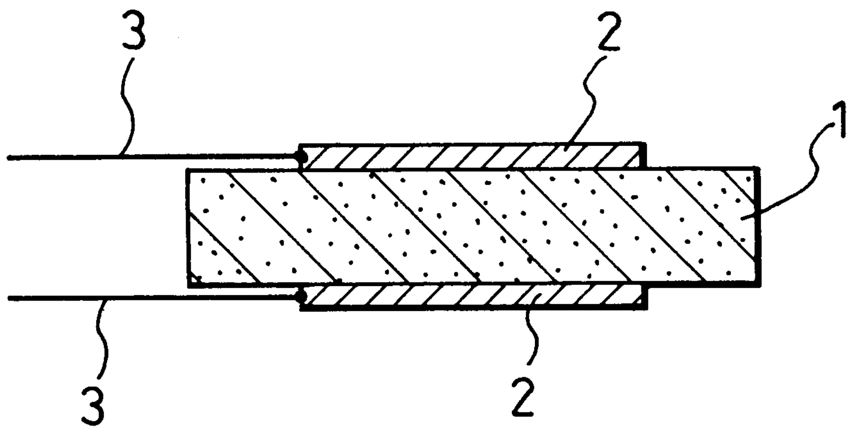

FIG. 2

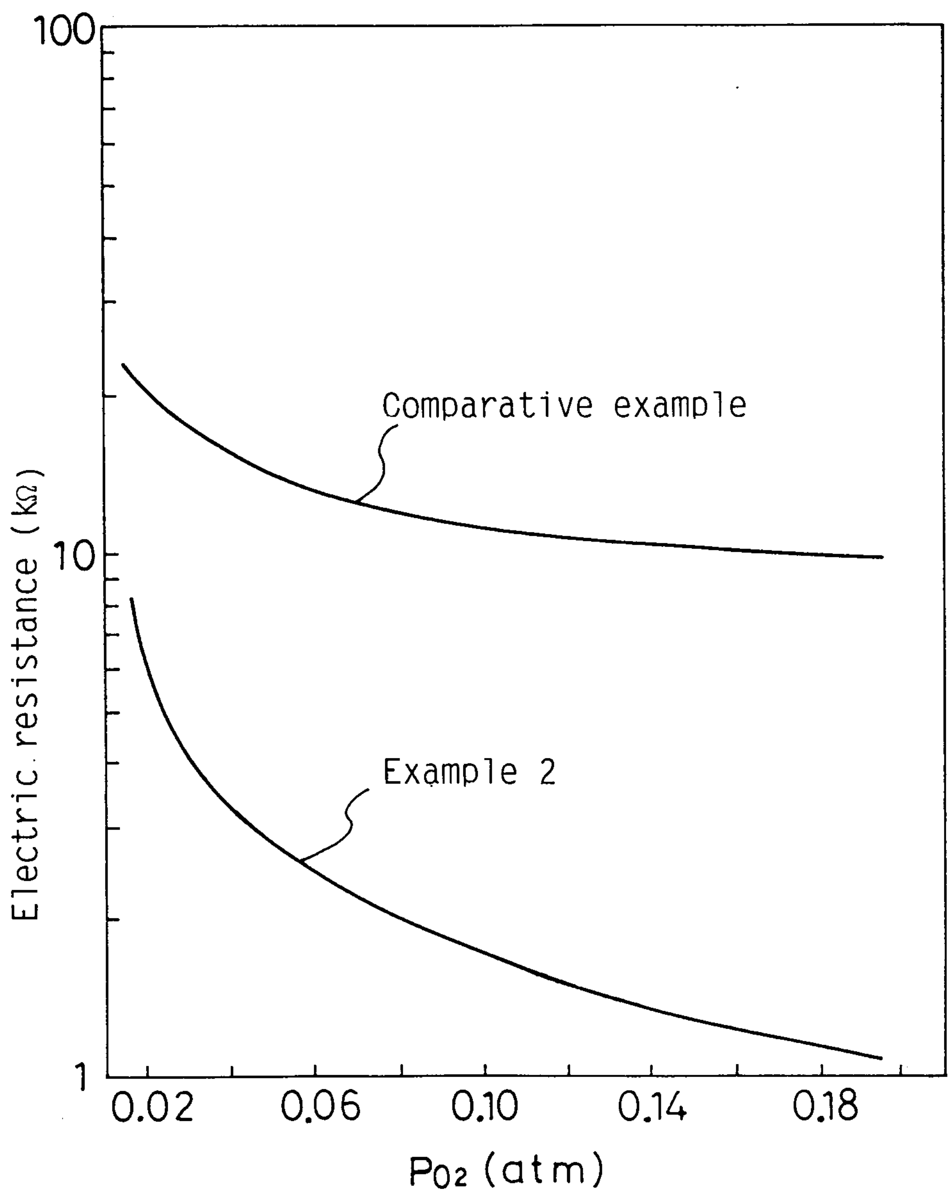
100
10
1
Electric resistance (kΩ)
Comparative example
Example 2
0.02
0.06
0.10
0.14
0.18
Po2 (atm)

FIG. 3

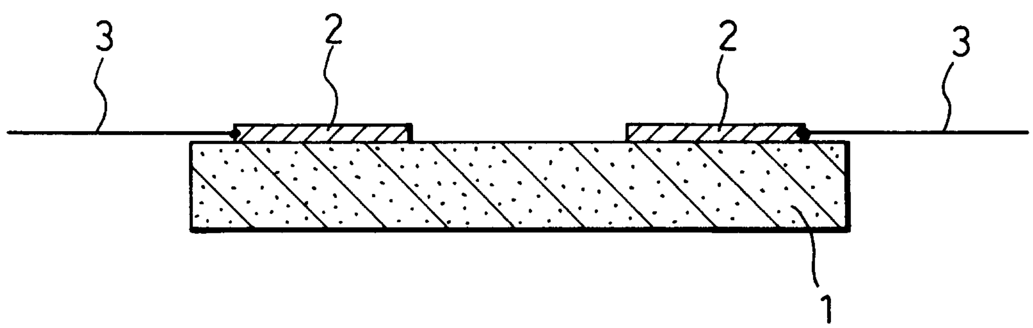

FIG.4

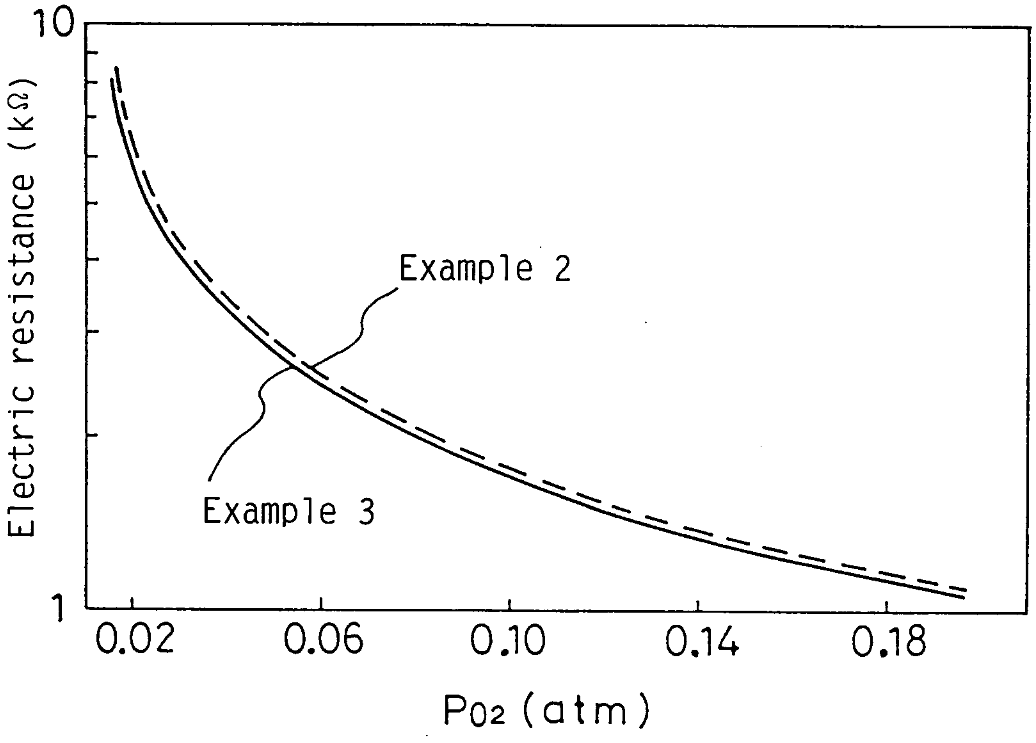
10
1
Electric resistance (kΩ)
Example 2
Example 3
0.02
0.06
0.10
0.14
0.18
Po2 (atm)

FIG.5

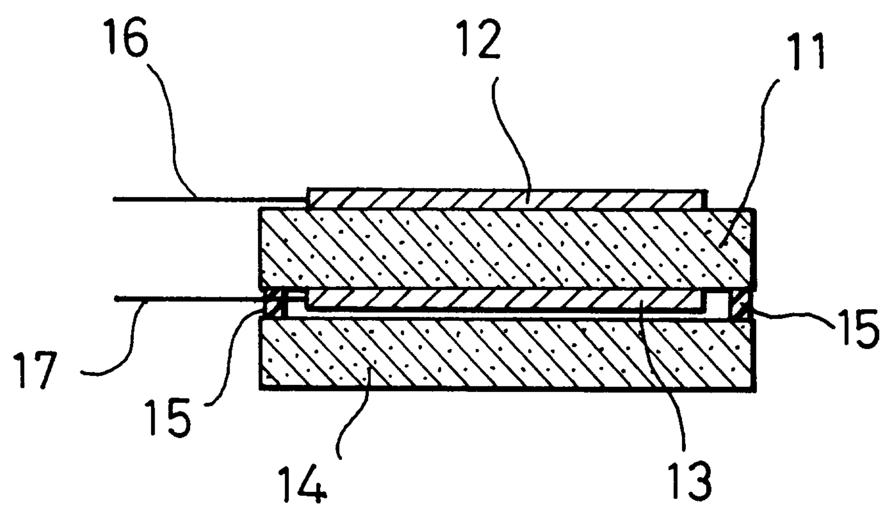

FIG.6

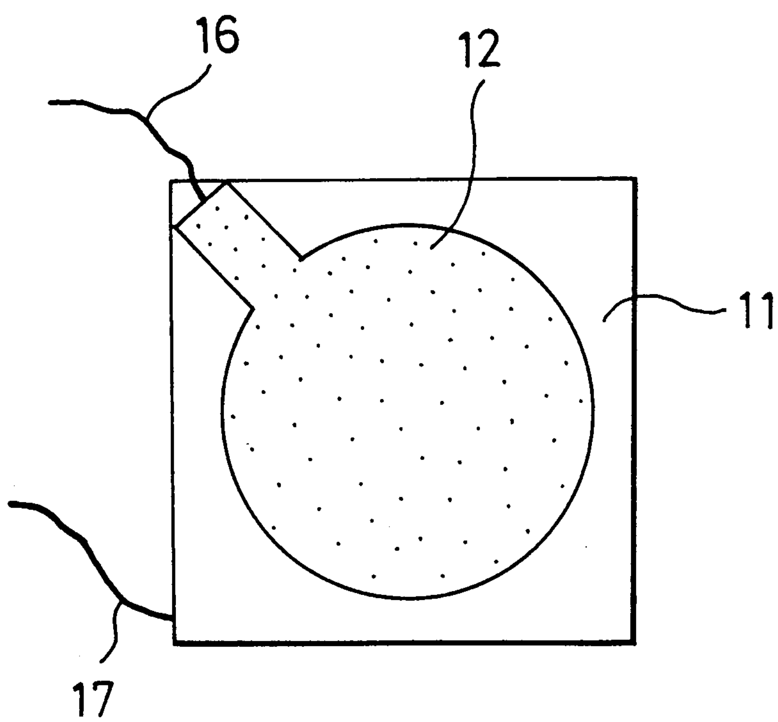

FIG.7

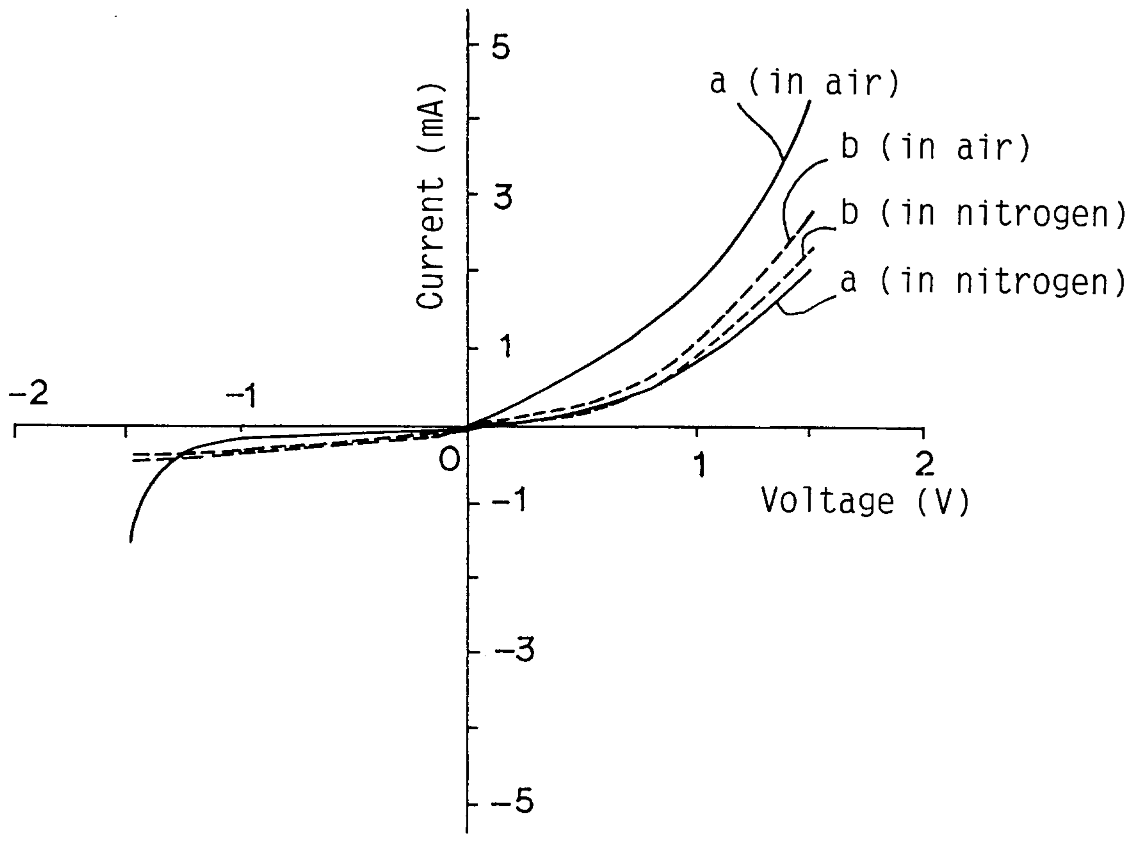
a (in air)
b (in air)
b (in nitrogen)
a (in nitrogen)
Current (mA)
5
3
1
-1
-3
-5
-2
-1
0
1
2
Voltage (V)

FIG.8

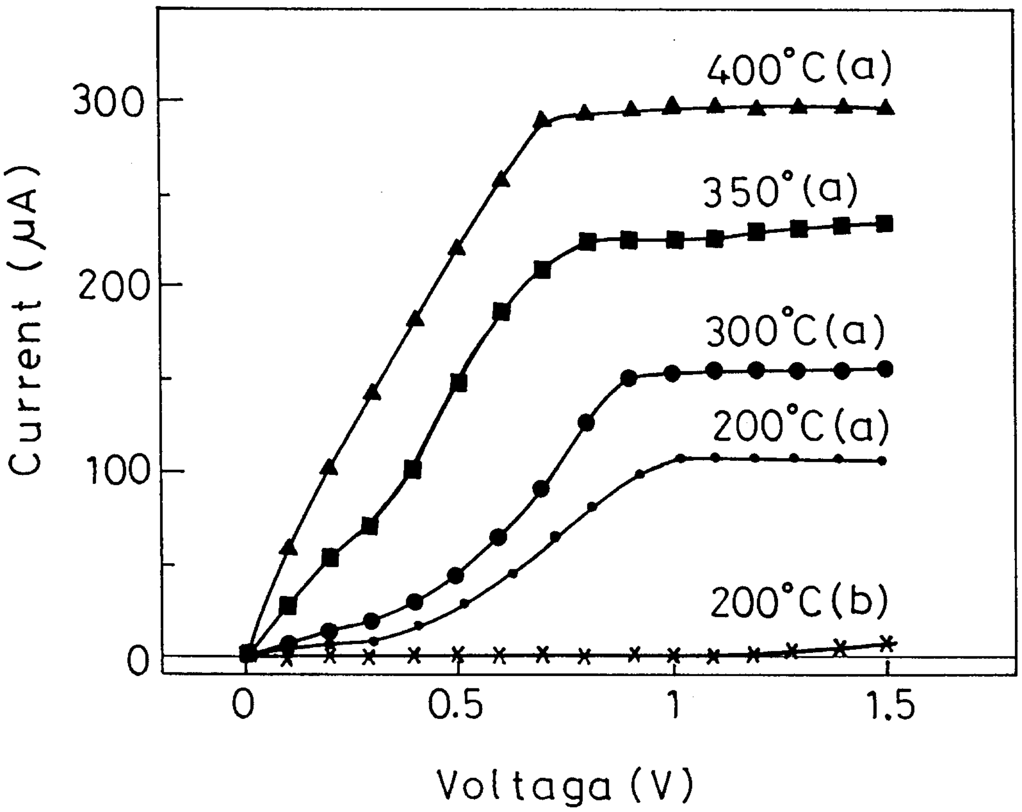

400°C (a)
350° (a)
300°C (a)
200°C (a)
200°C (b)
Current (μA)
300
200
100
0
0
0.5
1
1.5
Voltaga (V)

FIG.9

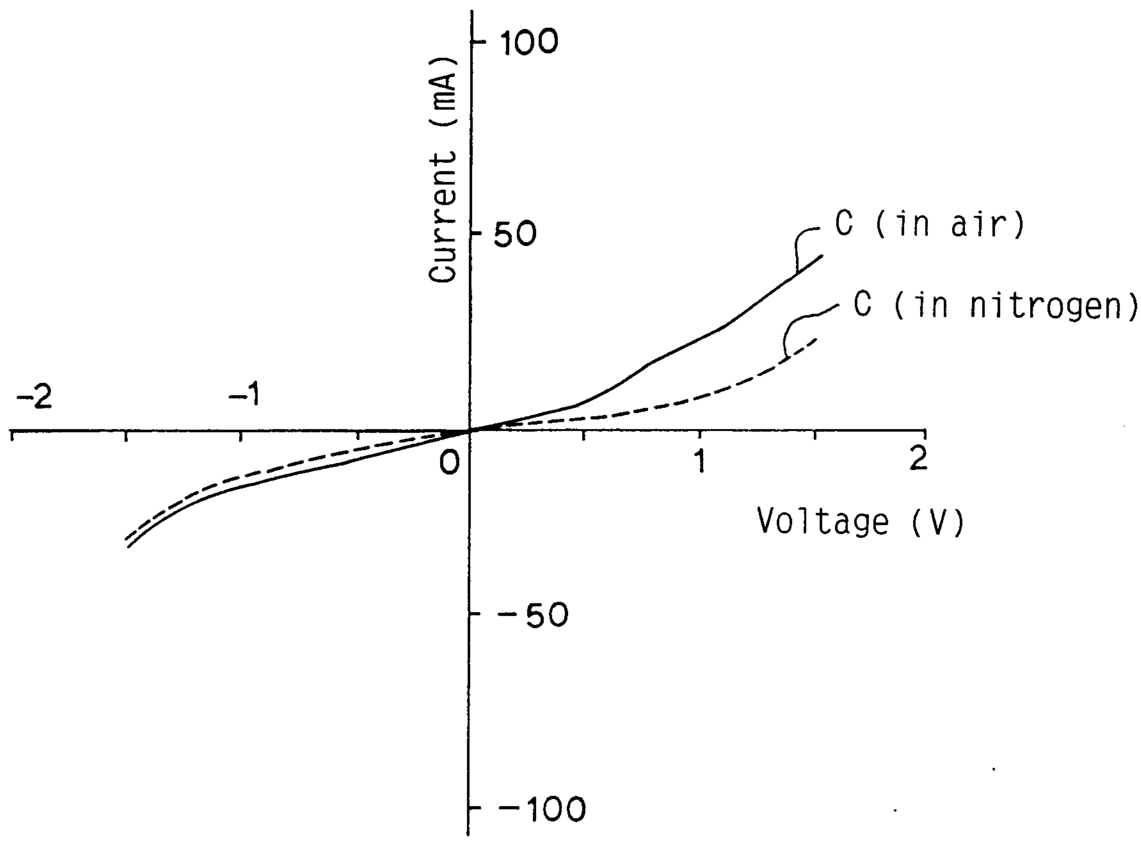

FIG.10

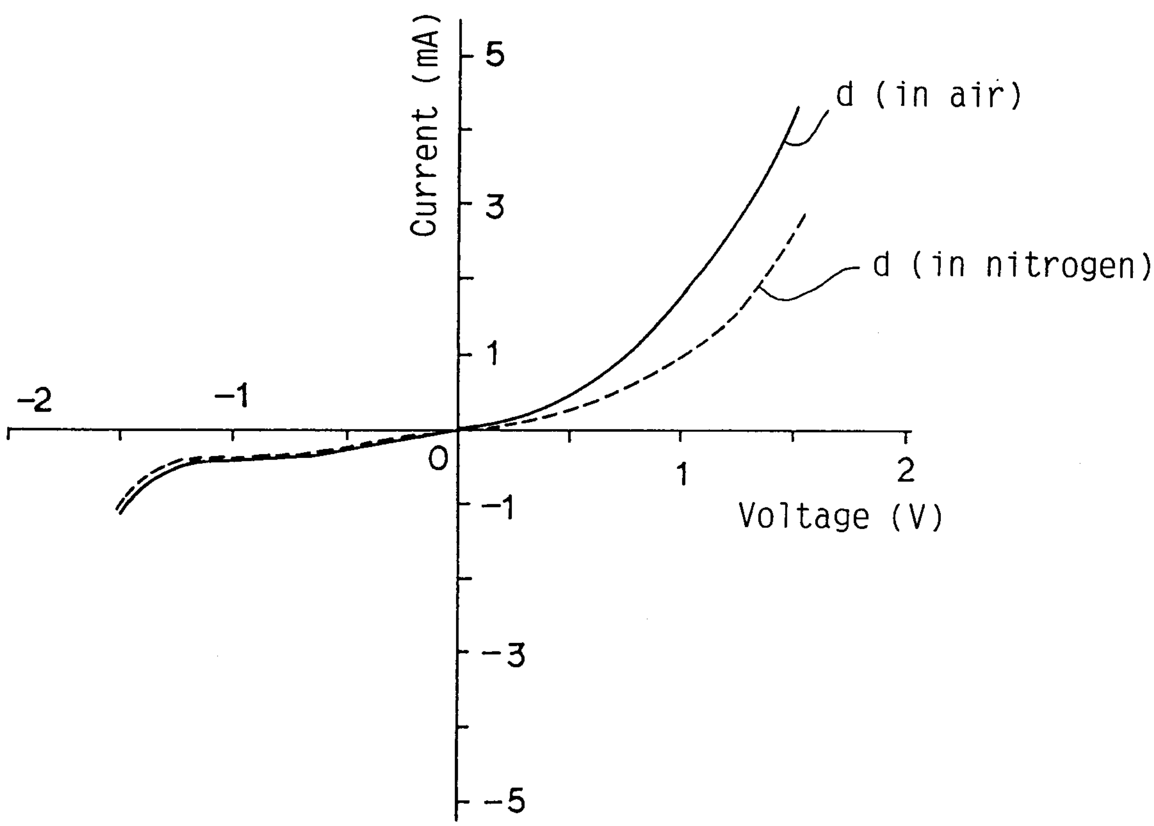

FIG.11

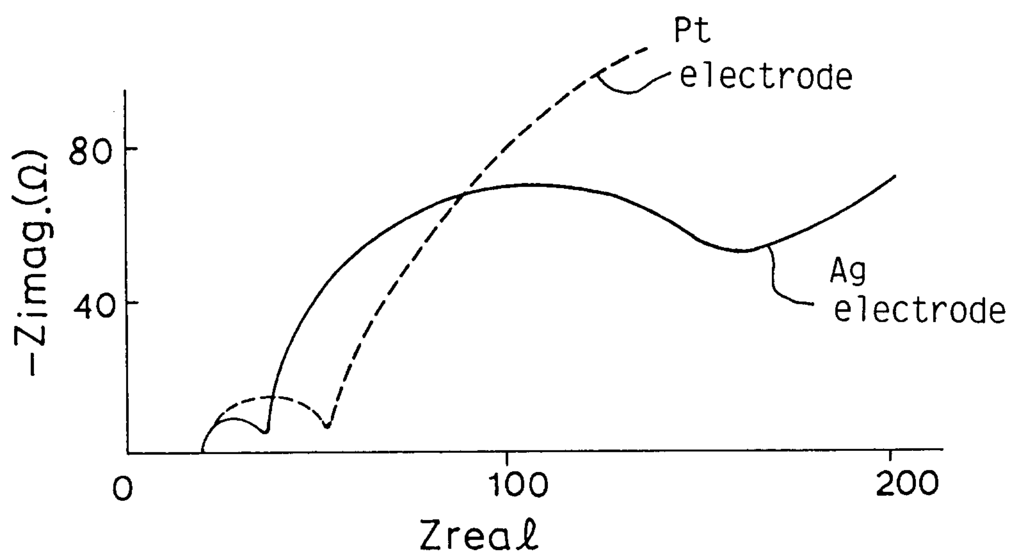

F I G.12

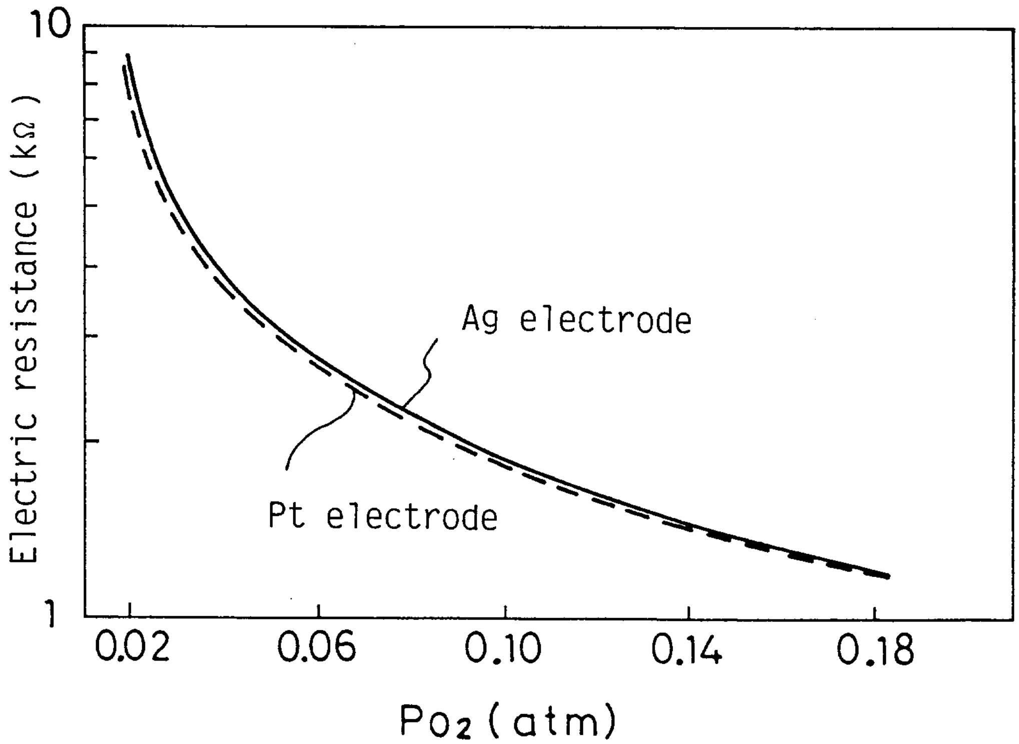
10
1
Electric resistance (kΩ)
Ag electrode
Pt electrode
0.02
0.06
0.10
0.14
0.18
Po2 (atm)